# EUROPEAN PATENT APPLICATION

(11) **EP 3 797 640 A1**
(43) Date of publication of application: **31.03.2021**
(21) Application number: 19833753.7
(22) Date of filing: 10.06.2019
(51) Int. Cl.: A45D 40/26, B65D 47/06, A45D 40/22, A45D 34/04

(54) **COMPACT CONTAINER HAVING DISCHARGE PLATE INTEGRALLY INJECTION MOLDED BY INSERTING SPONGE THERETO**

(30) Priority: 13.07.2018 KR 20180081402
(71) Applicant: Pum-Tech Korea Co., Ltd, Incheon 21315 (KR)
(72) Inventor: LEE, Do Hoon, Incheon 21315 (KR)
(74) Representative: Eder, Michael
(86) International application number: PCT/KR2019/006921
(87) International publication number: WO 2020/013452

(57) **Abstract**

The present disclosure relates to a compact container which comprises an inner container for accommodating a cosmetic material therein and a discharge unit for discharging the cosmetic material accommodated in the inner container, and which has a discharge plate integrally injection molded by inserting a sponge thereto, the compact container enabling an even distribution of the discharged cosmetic material due to the sponge being in close contact with the discharge plate perfectly without moving, as the discharge plate and the sponge are integrally molded by means of insert injection molding by injection molding the discharge plate by inserting the sponge thereto. In addition, while the discharge plate and the sponge are integrally insert injection molded, a dish part in the shape of a small groove is formed at the center of the discharge plate so that the discharge plate and the sponge are spaced a certain distance apart from each other, and a joining part is formed on the outside of the dish part so that the discharge plate and the sponge are joined without a gap by means of insert injection molding, and, thus, the discharge plate and the sponge are in close contact by means of the joining part so that the sponge is not swept away when washed directly in running water. The present disclosure provides the compact container having the discharge plate integrally injection molded by inserting the sponge thereto, the compact container comprising: the inner container for accommodating the cosmetic material therein; the discharge unit for discharging the cosmetic material accommodated in the inner container; and the discharge plate formed to be adjacent to the discharge unit and having a discharge outlet, wherein the discharge plate has the sponge integrally molded by means of insert injection molding so that the sponge is attached to the discharge plate without moving.

## Description

### [Technical Field]

One aspect of the present disclosure relates to a compact container which comprises an inner container for accommodating a cosmetic material therein and a discharge unit for discharging the cosmetic material accommodated in the inner container, and which has a discharge plate integrally injection molded by inserting a sponge thereto, the compact container enabling an even distribution of the discharged cosmetic material due to the sponge being in close contact with the discharge plate perfectly without moving, as the discharge plate and the sponge are integrally molded by means of insert injection molding by injection molding the discharge plate by inserting the sponge thereto. In addition, while the discharge plate and the sponge are integrally insert injection molded, a dish part in the shape of a small groove is formed at the center of the discharge plate so that the discharge plate and the sponge are spaced a certain distance apart from each other, and a joining part is formed on the outer portion of the dish part so that the discharge plate and the sponge are joined without a gap by means of insert injection molding, and, thus, the discharge plate and the sponge are in close contact by means of the joining part so that the sponge is not swept away when washed directly in running water. The present disclosure provides the compact container having the discharge plate integrally injection molded by inserting the sponge thereto, the compact container comprising: the inner container for accommodating the cosmetic material therein; the discharge unit for discharging the cosmetic material accommodated in the inner container; and the discharge plate formed to be adjacent to the discharge unit and having a discharge outlet, wherein the discharge plate has the sponge integrally molded by means of insert injection molding so that the sponge is attached to the discharge plate without moving.

### [Background Art]

In general, cosmetics used to decorate their appearance were considered to be mainly used by women, but in modern times, the frequency of use of cosmetics is increasing regardless of age or sex.

The cosmetics may be classified into point makeup cosmetics used for eyes, lips, eyebrows, etc., and base makeup cosmetics used to brighten skin color and organize skin tone depending on the area of use.

Among them, base makeup cosmetics may be largely classified into solid, liquid, and gel types depending on the type of the cosmetics, and each type has advantages and disadvantages. Solid-type base makeup cosmetics have excellent coverage, but may cause rash and poor adhesion when applied to skin. Liquid-type base makeup cosmetics have excellent adhesion when applied to skin, but have poor durability.

Therefore, the frequency of use of gel-type base makeup cosmetics with excellent adhesion, coverage and durability has increased.

However, the gel-type base makeup cosmetics are mainly applied after being put on the hand, but it is difficult to discharge a certain amount of cosmetics. For this reason, cosmetics on the hand of a user may make his hand dirty, and bacteria may penetrate into the container from the hand, thereby contaminating the cosmetic material inside the container.

Although it is possible to consider how to put the cosmetics in a compact container and use it in the form of using a puff without getting it on hands, unlike solid-type base makeup cosmetics, volatile components of gel-type base makeup cosmetics may be volatilized, so that it is difficult to use cosmetics while the cosmetics are contained in the compact container without sealing.

To solve the above problems, as shown in FIG. 1, there has been disclosed a compact container in Korean Registered Patent No. 10-1566114, which includes a discharge unit that keeps the cosmetics sealed inside the compact container and discharges the cosmetics to an outside, where a guide plate, a sealing member, a net member, and a discharge plate are combined with each other in order, and the cosmetics discharged through an outlet are put on a puff to be used.

However, according to the conventional compact container described above, since the outlet through which the cosmetics are discharged is formed only at a specific location, when the cosmetics are applied to the puff for use, the cosmetics are not evenly spread on the lower surface of the puff, but partially on the lower surface of the puff, so that it is difficult to spread evenly on the skin.

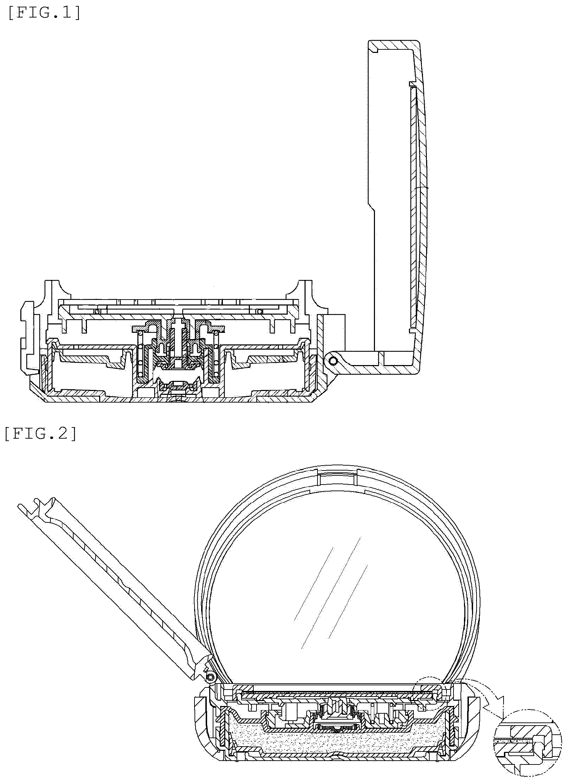

To solve the above problems, as shown in FIG. 2, there has been disclosed a compact container having a mixing cushion and a mixing mesh net in Korean Unexamined Patent Publication No. 10-2018-0004340. The compact container includes a discharge unit provided inside the compact container, where a discharge plate, a mixing cushion, and a mesh network are sequentially formed so that the cosmetics are evenly discharged after the cosmetics are spread through a distribution plate.

However, according to the conventional compact container described above, the mixing cushion and the discharge plate are not adhered to each other and are only fixed by a moving prevention protrusion wheel, so that the mixing cushion may be prevented from horizontally moving by the moving prevention protrusion wheel. However, it is impossible to prevent the mixing cushion from moving up and down due to the pressure of the cosmetic material discharged through the discharge unit. Accordingly, it is difficult to disperse the cosmetics evenly on the mixing cushion because the mixing cushion is lifted up by the cosmetics and a space is created between the mixing cushion and the discharge plate so that the discharge cosmetics are discharged while being gathered at one side in the space.

In addition, since the mixing cushion is not bonded to the discharge plate, there is a risk that the mixing cushion may be swept away by running water when the mesh is removed and washed with running water. To prevent this, it was difficult to cleanly wash the mixing cushion due to the mesh net covered when washing without taking off the mesh net. For this reason, when washing the mixing cushion, the compact container must be individually disassembled and the mixing cushion must be washed after being taken off.

In addition, because the discharge plate with several small discharge holes is combined on the distribution plate formed with a labyrinth-like diffusion space, even if it is washed while flowing water over the discharge plate, it is impossible to cleanly wash various gaps such as a diffusion space between the distribution plate and the discharge plate, so that cosmetic residues are decayed or dried up, thereby causing skin troubles or preventing the contents from being properly discharged.

In addition, the assembly process is complicated because the compact container is additionally equipped with a distribution plate and a mesh net. In particular, when the mixing mesh net is bonded to the joining part of the ring-shaped fixture, the manufacturing cost may increase due to the addition of a manufacturing process such as ultrasonic bonding, high-frequency bonding, or thermal bonding.

### [Disclosure]

### [Technical Problem]

. To solve the problems described above, an object of the present disclosure is to provide a compact container having a discharge plate integrally injection molded by inserting a sponge thereto, which includes an inner container for containing a cosmetic material therein, a discharge unit for discharging the cosmetic material contained in the inner container, and a discharge plate that uniformly distributes cosmetics because the discharge plate is integrally injection molded by inserting the sponge thereto so that the sponge is in close contact with the discharge plate perfectly without moving.

Another object of the present disclosure is to provide a compact container having a discharge plate integrally injection molded by inserting a sponge thereto, where the discharge plate and the sponge are integrally insert injection molded, a dish part in the shape of a small groove is formed at the center of the discharge plate so that the discharge plate and the sponge are spaced a certain distance apart from each other, and a joining part is formed on the outer portion of the dish part so that the discharge plate and the sponge are joined without a gap by means of insert injection molding, and, thus, the discharge plate and the sponge are in close contact by the joining part so that the sponge is not swept away when washed directly in running water.

Still another object of the present disclosure is to provide a compact container having a discharge plate integrally injection molded by inserting a sponge thereto, which does not have a component having a labyrinth-like diffusion space with the distribution plate, and does not have several small discharge holes in the discharge plate, so that there are no gaps such as the diffusion space between the distribution plate and the discharge plate. In addition, the piston and piston ring are in close contact with each other and are blocked, so that it possible to minimize the space where cosmetic material remains.

In addition, still another object of the present disclosure is to provide a compact container having a discharge plate integrally injection molded by inserting a sponge thereto, which does not have a separate distribution plate and in which additional parts such as mesh nets installed on the shouldering, so that the assembly process may be simple and the manufacturing cost may be reduced.

### [Technical Solution]

According to one aspect of the present disclosure, there is provided a compact container having a discharge plate integrally injection molded by inserting a sponge thereto, which includes an inner container for containing a cosmetic material therein; a discharge unit for discharging the cosmetic material contained in the inner container; and the discharge plate formed to be adjacent to the discharge unit and having a discharge outlet, wherein the discharge plate is molded integrally with a sponge through insert injection molding such that the sponge is attached to the discharge plate without moving, a dish part is formed at a center the discharge plate to contain a small amount of cosmetic material, and a joining part is formed on an outer portion of the dish part to be joined to the sponge.

In addition, the discharge unit may include a pump configured to pump and discharge the cosmetic material.

In addition, the pump may include a piston and a piston ring which are closed in close contact with each other before the discharge plate is pressurized.

In addition, the dish part may be formed in a groove shape to space the sponge apart from a surface of the discharge plate.

In addition, the sponge may include a compressed sponge.

### [Advantageous Effects]

According to one aspect of the present disclosure, the compact container having a discharge plate integrally injection molded by inserting a sponge thereto includes the inner container for containing a cosmetic material therein, the discharge unit for discharging the cosmetic material contained in the inner container, and the discharge plate for uniformly distributing cosmetics, where the discharge plate is integrally injection molded by inserting the sponge thereto so that the sponge is in close contact with the discharge plate perfectly without moving.

In addition, according to the compact container having a discharge plate integrally injection molded by inserting a sponge thereto of the present disclosure, the discharge plate and the sponge are integrally insert injection molded, a dish part in the shape of a small groove is formed at the center of the discharge plate so that the discharge plate and the sponge are spaced a certain distance apart from each other, and a joining part is formed on the outer portion of the dish part so that the discharge plate and the sponge are joined without a gap by means of insert injection molding, and, thus, the discharge plate and the sponge are in close contact by the joining part so that the sponge is not swept away when washed directly in running water.

In addition, according to the present disclosure, the compact container having a discharge plate integrally injection molded by inserting a sponge thereto does not have a component having a labyrinth-like diffusion space with the distribution plate, and does not have several small discharge holes in the discharge plate, so that there are no gaps such as the diffusion space between the distribution plate and the discharge plate. In addition, the piston and piston ring are in close contact with each other and are blocked, so that it possible to minimize the space where cosmetic material remains.

In addition, according to the present disclosure, the compact container having a discharge plate integrally injection molded by inserting a sponge thereto does not have a separate distribution plate and additional parts such as mesh nets installed on the shouldering, so that the assembly process may be simple and the manufacturing cost may be reduced.

### [Description of Drawings]

FIG. 1 is a view illustrating a conventional cosmetic container.
FIG. 2 is a view illustrating a conventional compact container provided with a mixing cushion and a mixing mesh net.
FIG. 3 is a perspective view illustrating a compact container according to an embodiment of the present disclosure.
FIG. 4 is an exploded perspective view illustrating a compact container according to an embodiment of the present disclosure.
FIG. 5 is a cross-sectional view illustrating a compact container according to an embodiment of the present disclosure.
FIG. 6 is a cross-sectional view illustrating a state in which the sponge of a compact container according to an embodiment of the present disclosure is pressed with a puff.
FIG. 7 is a cross-sectional view illustrating a state in which the pressure on the sponge of a compact container according to an embodiment of the present disclosure is released.
FIG. 8 is a cross-sectional view illustrating a state of washing a compact container according to an embodiment of the present disclosure.

### [Best Mode]

### [Mode for Invention]

Technical objects to be achieved by the present disclosure and embodiments of the present disclosure will be apparent through preferable embodiments to be described below. Hereinafter, a compact container having a discharge plate integrally injection molded by inserting a sponge thereto according to an embodiment of the present disclosure will be described with reference to accompanying drawings.

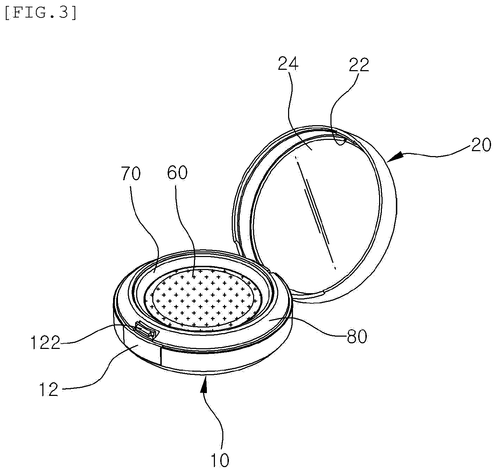

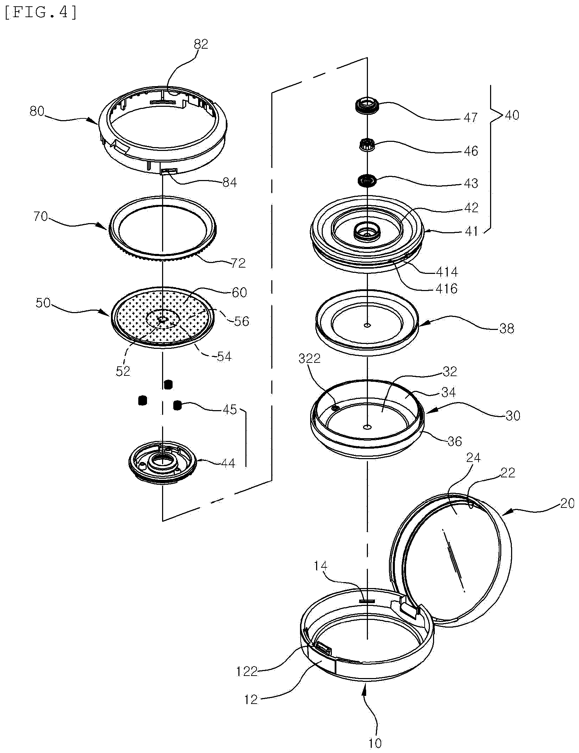

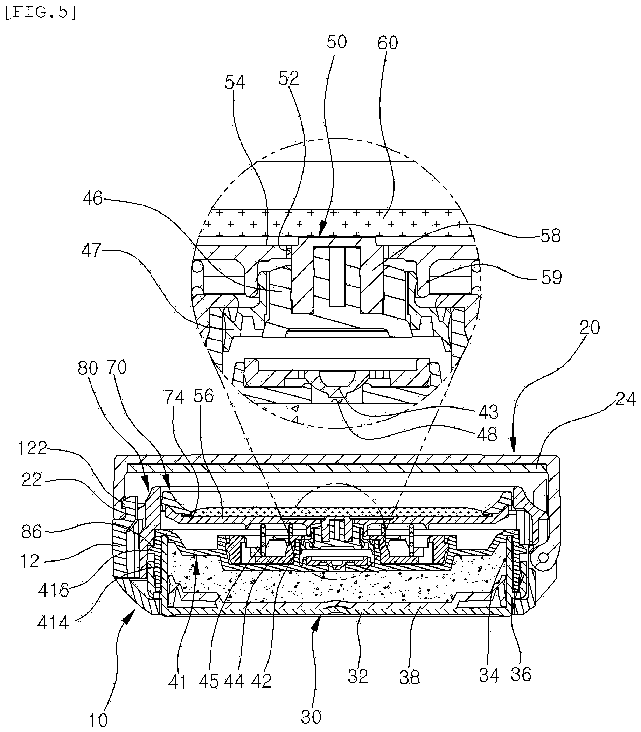

FIG. 3 is a perspective view illustrating a compact container according to an embodiment of the present disclosure. FIG. 4 is an exploded perspective view illustrating a compact container according to an embodiment of the present disclosure. FIG. 5 is a cross-sectional view illustrating a compact container according to an embodiment of the present disclosure.

A compact container having a discharge plate integrally injection molded by inserting a sponge thereto according to an embodiment of the present disclosure includes an inner container 30 for containing a cosmetic material therein, a discharge unit 40 for discharging the cosmetic material contained in the inner container 30, and the discharge plate 30 formed to be adjacent to the discharge unit 40 and having a discharge outlet 52.

The inner container 30 is installed inside an outer container 10, and an outer container lid 20 for opening and closing the outer container 10 is coupled to one side of the outer container 10.

As shown in FIG. 4, a button 12 is formed on the front surface of the outer container 10, and a locking protrusion 122 that is retracted by a user's pressing operation protrudes from an upper portion of the button 12.

A coupling shoulder 80 is coupled to an inside of the outer container 10. As shown in FIG. 5, the coupling shoulder 80 presses a pump housing 41 of the discharge unit 40 to fix the pump housing 41 and the inner container 30 inside the outer container 10. In addition, when the discharge plate 50 moves up and down on an upper portion of the discharge unit 40, the coupling shoulder 80 serves to guide the discharge plate 50 to move vertically without inclining to one side.

A pressing sill 86 is formed on an inner periphery of the coupling shoulder 80 to press and fix the pump housing 41 of the discharge unit 40.

A coupling protrusion 14 is formed on an inner periphery of the outer container 10, and a coupling groove 84 is formed on an outer periphery of the coupling shoulder 80, such that the coupling protrusion 14 and the coupling groove 84 are coupled to each other.

The outer container lid 20 is hinged to one side of the outer container 10 to open and close the outer container 10.

A hook 22 having a shape of a protrusion is formed on the front surface of the outer container lid 20 to be fastened with the locking protrusion 122 of the outer container 10. In addition, a mirror 24 may be formed on an inner surface of the outer container lid 20 such that the user may easily apply makeup while illuminating the makeup area.

A gel-type or liquid-type cosmetic material is contained inside the inner container 30. The inner container 30 is installed inside the outer container 10 as described above, and is fixed and coupled to the inside of the outer container 10 together with the pump housing 41 while being pressed by the coupling shoulder 80.

The inner container 30 includes a bottom surface 32, an inner wall 34 extending upward from the bottom surface 32, and an outer wall 36 extending upward from the inner wall 34 while be spaced apart outward from the inner wall 34 by a predetermined interval.

An air flow hole 322 through which external air is introduced is formed at one side of the bottom surface 32 of the inner container 30.

A push plate 38 that pushes up the cosmetic material while moving upward by the amount of the cosmetic material discharged is formed inside the inner container 30, and the push plate 38 is in close contact with the inner surface of the inner container 30.

The discharge unit 40 is installed adjacent to the inner container 30, and discharges the cosmetic material contained in the inner container 30 by the pressurizing action of the discharge plate 50. As shown in FIG. 5, at least a portion of the discharge unit 40 may be inserted into the inside of the inner container 30.

The discharge unit 40 may be a pump that pumps the cosmetic material contained in the inner container 30 and discharges the cosmetic material to an outside.

The discharge unit 40 may include a pump housing 41 coupled to an upper portion of the inner container 30, a cylinder 42 formed at the center of the pump housing 41 and having a content suction hole 48 formed on the bottom surface thereof, a suction valve plate 43 mounted on the bottom surface of the cylinder 42 to selectively open and close the content suction hole 48, a bushing 44 mounted on the upper end of the cylinder 42 and coupled to the outside of the cylinder 42, an elastic member 45 installed on the bushing 44 to elastically support the discharge plate 50, a piston 46 coupled to a lower side of the discharge plate 50 and moving up and down inside the cylinder 42, and a piston ring 47 fitted with an outside of the piston 46 and being in close contact with the inner surface of the cylinder 42.

The pump housing 41 is coupled to an upper portion of the inner container 30 to seal the inner container 30. A lower extension protrusion wheel 414 is formed outside the pump housing 41 while extending downward, and is coupled between the inner and outer walls 34 and 36 of the inner container 30. A fixing protrusion wheel 416 which is pressed by the pressing sill 86 of the coupling shoulder 80 protrudes from an outer periphery of the lower extension protrusion wheel 414.

It is preferable that the piston 46 and the piston ring 47 constituting the pump are in close contact with each other and are blocked before the discharge plate 50 is pressed. That is, before use, the piston 46 and the piston ring 47 are in close contact with each other and are then opened only by the pressing of the discharge plate 50 such that the cosmetic material may pass therethrough. Thus, the cosmetic material in the cylinder 42 is prevented from being contaminated by air and foreign substances.

The discharge plate 50 is coupled to one side of the discharge unit 40 to discharge the cosmetic material to an outside.

As shown in FIG. 4, a dish part 54 is formed at the center of the discharge plate 50 to contain a small amount of the cosmetic material, and, a joining part 56 is formed on an outer portion of the dish part 54 to be joined to the sponge.

Since a small amount of the cosmetic material is always contained in the dish part 54, the sponge 60 always holds the cosmetic material. That is, even if the sponge 60 dries as the cosmetic material impregnated in the sponge 60 is volatilized, the cosmetic material contained in the dish part 54 is absorbed by the sponge 60 to prevent the sponge 60 from drying out. The dish part 54 is formed in a circular groove shape, and as shown in FIG. 5, the surface of the sponge 60 and the discharge plate 50 are spaced apart from each other by a predetermined interval by the dish part 54, so that a space in which a cosmetic material is contained formed.

A discharge outlet 52 for discharging the cosmetic material pumped by the discharge unit 40 is formed in the dish part 54. In other words, one or more discharge outlets 52 are formed on the bottom surface of the dish part 54 so that the cosmetic material is discharged into the dish part 54 through the discharge outlet 52.

The sponge 60 is bonded to the joining part 56 by insert injection, so that the discharge plate 50 and the sponge 60 are in close contact with each other without space between the discharge plate 50 and the sponge 60.

Through the above-described configurations, the compact container according to an embodiment of the present disclosure improves ease of cleaning and cleanliness by not configuring a distribution plate having a diffusion space. To further explain, as shown in FIG. 2, because a conventional compact container has a structure in which a distribution plate with a labyrinth-like diffusion space formed at the lower portion of the discharge plate and the discharge plate forms with a plurality of small discharge holes therein is connected to the diffusion space of the distribution plate, the cosmetic residue remaining in the mixing cushion located at the top of the discharge plate, the discharge hole and the diffusion space is decayed to cause skin troubles, or the cosmetic residue hardens to block the discharge hole, causing malfunction. To solve the above problems, water is allowed to flow over the discharge plate, thereby washing the discharge plate and the mixing cushion. In this case, according to the conventional compact container, water dose not flow into the small discharge hole, so that the discharge hole and the diffusion space cannot be properly cleaned, or even if water enters the small discharge hole, the washing water remains in the diffusion space and rather spreads contamination.

Therefore, according to the compact container according to an embodiment of the present disclosure, by removing the distribution plate having a complex diffusion space under the discharge plate 50 and connecting the discharge plate 50 directly to the discharge unit 40, there is no diffusion space that is formed in a lower surface of the discharge plate 50, that is, a space that cannot be washed with water to pool a cosmetic material therein and to be contaminated, so that it is possible to easily wash the compact container, thereby preventing the cosmetic residue from decaying or drying out and causing skin trouble.

On the lower surface of the discharge plate 50, as shown in the partially enlarged view of FIG. 5, a first lower extension protrusion wheel 58 is formed to extend downward, and a second lower extension protrusion wheel 59 is formed to extend downward while being spaced apart from the first lower extension protrusion wheel 58 by a predetermined interval. The first lower extension protrusion wheel 58 is coupled to the upper portion of the piston 46 of the discharge unit 40, and the second lower extension protrusion wheel 59 is in close contact with the upper outer portion of the piston ring 47 of the discharge unit 40.

That is, as described above, by allowing the discharge plate 50 to be directly connected to the piston 46 of the discharge unit 40 by the first lower extension protrusion wheel 58, the structure of the compact container is simplified to improve the productivity. In addition, the space between the discharge plate 50 and the discharge unit 40 in which the cosmetic material is contaminated is eliminated.

As shown in FIG. 5, a sponge 60 is molded integrally with the discharge plate 50 by insert injection, so that the sponge 60 is attached without moving from the discharge plate 50.

That is, since the conventional compact container has a structure in which the mixing cushion and the discharge plate are not adhered to each other and are fixed by a moving prevention protrusion wheel, it was possible to prevent the mixing cushion from horizontally moving by the moving prevention protrusion wheel, but it is impossible to prevent the mixing cushion from moving up and down due to the pressure of the cosmetic material discharged through the discharge unit. Therefore, the mixing cushion is lifted by the cosmetic material to create a space between the mixing cushion and the discharge plate, and as a result, the discharged cosmetic material is discharged while being pushed to one side in the space, so that it is difficult to uniformly disperse the cosmetic material in the mixing cushion.

In order to solve such a problem, in the compact container according to an embodiment of the present disclosure, the discharge plate 50 and the sponge 60 are integrally molded by insert injection, so that the sponge is completely closed to the discharge plate 50 without moving, thereby allowing the discharged cosmetic material to be evenly distributed throughout the sponge 60. In addition, since there is no need to separately provide a structure for fixing the sponge 60 to the discharge plate 50, the assembly process may be simplified, and thus manufacturing cost may be reduced.

The sponge 60 is preferably a compression sponge (EthyleneVinyl Acetate Copolymer, a material that has reinforced elasticity than a general sponge, has excellent flexibility, good cushioning, strong internal shock, and excellent absorption).

In addition, preferably, the sponge 60 is formed of at least one material of butadiene rubber (BR), styrene butadiene rubber (SBR), natural rubber (NR), wet urethane, dry urethane, polyether, polyester, polyvinyl chloride, polyethylene, ethylene vinyl acetate, latex, silicone, polystyrene-polyisoprene-polystyrene, polystyrene-polyethylenebutylene-polystyrene, polyvinyl alcohol (PVA), silicone elastomer, nitrile rubber, butyl rubber, and neoprene.

A shoulder ring 70 may be further coupled to an upper portion of the discharge plate 50. The shoulder ring 70 is formed in a ring shape and is coupled or bonded while surrounding the edge portion of the sponge 60 and the upper portion of the discharge plate 50.

As shown in FIG. 4, the shoulder ring 70 has a plurality of first rotation preventing protrusions 72 formed on an outer periphery, and a plurality of second rotation preventing protrusions 82 is formed on the inner circumference of the coupling shoulder 80. When the shoulder ring 70 is coupled to the lower side of the coupling shoulder 80, each of the first rotation preventing protrusions 72 is sandwiched between the second rotation preventing protrusions 82 to prevent the shoulder ring 70 from spinning.

As shown in FIG. 5, a pressing protrusion 74 is formed on the inner lower surface of the shoulder ring 70 to press the edge of the sponge 60 formed integrally with the discharge plate 50. Therefore, it is possible to further improve the adhesion between the sponge 60 and the discharge plate 50.

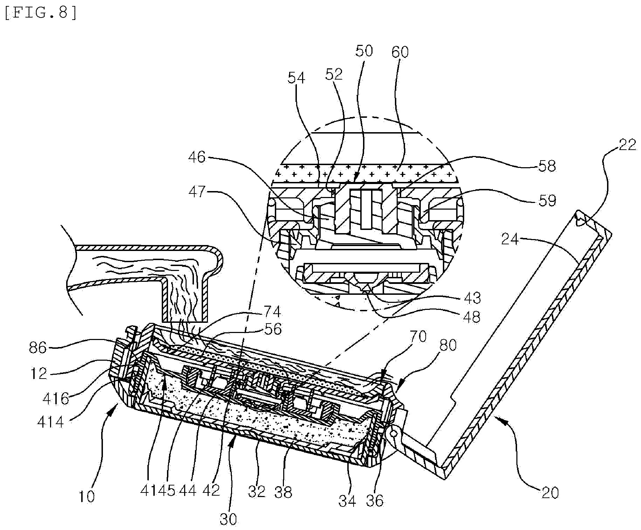

FIG. 8 is a cross-sectional view illustrating a state of washing a compact container according to an embodiment of the present disclosure.

The compact container according to the present disclosure may be easily cleaned through the above-described configurations.

That is, in the conventional compact container, because the mixing cushion is not integrally formed with the discharge plate, when the compact container is washed with running water, there is a risk that the mixing cushion is floated by the running water. As a result, it is inconvenient to wash the mixing cushion after disassembling one by one the compact container and separating the mixing cushion.

In order to solve such a problem, the compact container according to an embodiment of the present disclosure allows the sponge 60 to be molded integrally with the discharge plate 50 by insert injection, so that the sponge 60 is completely attached to the upper surface of the discharge plate 50. Thus, as shown in FIG. 8, when the compact container is washed with water while being inclined at an angle, the sponge 60 is not only washed directly with running water, but also does not drift away by running water.

A method of assembling a compact container having a discharge plate integrally injection molded by inserting a sponge thereto, which is configured as described above, will be described with reference to the accompanying drawings.

In order to assemble the compact container according to the present disclosure, as shown in FIGS. 4 and 5, first, the inner container 30 is inserted into the outer container 10 to which the outer container lid 20 is hinged at one side.

Next, after inserting the push plate 38 into the inner container 30 and injecting a cosmetic material, the pump housing 41 of the discharge unit 40 is coupled to the upper portion of the inner container 30, where the lower extension protrusion wheel 414 of the pump housing 41 is fitted and coupled between the inner wall 34 and the outer wall 36 of the inner container 30.

Next, the suction valve plate 43, the bushing 44, the elastic member 45, the piston 46, and the piston ring 47 are installed on the upper portion of the pump housing 41.

Next, the discharge plate 50 is coupled to the upper portion of the discharge unit 40, where the first lower extension protrusion wheel 58 of the discharge plate 50 is coupled to the piston 46, and the second lower extension protrusion wheel 59 is in close contact with the upper outer side of the piston ring 47. In this case, the sponge 60 is molded integrally with the discharge plate 50 by insert injection, and the shoulder ring 70 is coupled or bonded to the upper portion.

Finally, the coupling shoulder 80 is inserted and coupled between the outer container 10 and the inner container 30, and the coupling protrusion 14 of the outer container 10 is coupled to the coupling groove 84 of the coupling shoulder 80 (84). At the same time, the upper end of the fixing protrusion wheel 416 of the pump housing 41 is pressed and fixed by the pressing sill 86 of the coupling shoulder 80, and the first rotation preventing protrusion 72 of the shoulder ring 70 is fitted between the second rotation preventing protrusions 82 of the coupling shoulder 80. In this case, the pressing protrusion 74 of the shoulder ring 70 presses the edge of the sponge 60.

A method of using the compact container having a discharge plate integrally injection molded by inserting a sponge thereto assembled in the above-described manner will be described with reference to the accompanying drawings.

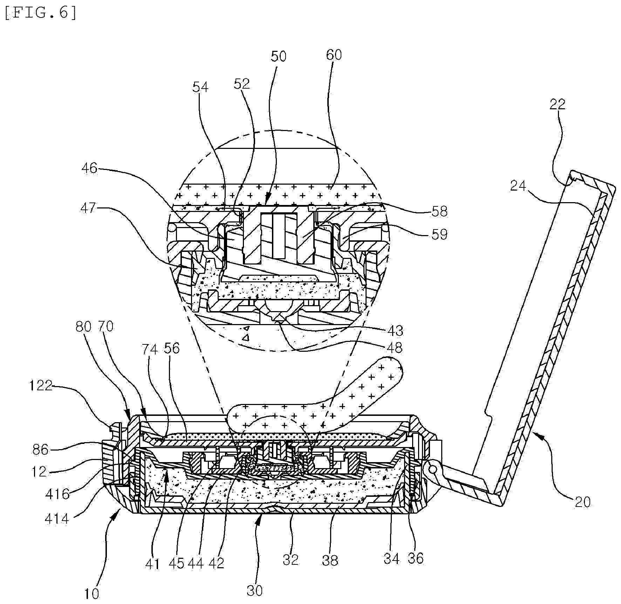

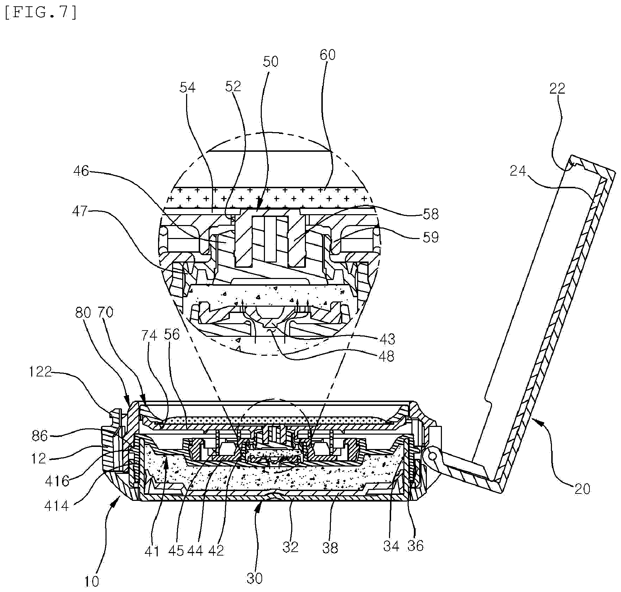

FIG. 6 is a cross-sectional view illustrating a state in which the sponge of a compact container according to an embodiment of the present disclosure is pressed with a puff. FIG. 7 is a cross-sectional view illustrating a state in which the pressure on the sponge of a compact container according to an embodiment of the present disclosure is released.

In order to use the compact container according to the present disclosure, first, the button 12 of the outer container 10 is pressed to open the outer container lid 20.

Thereafter, as shown in FIG. 6, the upper surface of the sponge 60 is pressed with a cosmetic tool such as a puff. When the sponge 60 is pressed, the discharge plate 50 is also moved downward, and the piston 46 and the piston ring 47 coupled to the lower side of the discharge plate 50 are moved downward, so that the inner volume of the cylinder 42 is reduced.

Accordingly, a pressure is generated in the cylinder 42, and as the cosmetic material in the cylinder 42 is to be discharged to the outside due to the pressure, a discharge pressure is generated so that the suction valve plate 43 closes the content suction hole 48 formed on the bottom surface of the cylinder 42.

At the same time, as shown in the enlarged drawing of FIG. 6, after the cosmetic material contained in the cylinder 42 is discharged between the piston 46 and the piston ring 47, and then, is introduced into the dish part 54 through the discharge outlet 52 of the discharge plate 50, the cosmetic material is absorbed by the sponge 60 formed integrally with the discharge plate 50 by insert injection, and thus the cosmetic material is stuck onto the puff.

Thereafter, as shown in FIG. 7, when the pressure on the sponge 60 is released, the discharge plate 50 moves upward due to the elasticity of the elastic member 45 that elastically supports the discharge plate 50, and the piston 46 and the piston ring 47 coupled to the lower side of the discharge plate 50 move upward, so that the inner volume of the cylinder 42 increases, thereby generating a vacuum pressure.

At the same time, while the suction valve plate 43 is lifted by the vacuum pressure generated inside the cylinder 42, the content suction hole 48 formed on the bottom surface of the cylinder 42 is opened, so that the cosmetic material contained in the inner container 30 flows into the cylinder 42 through the content suction hole 48, and at the same time, the push plate 38 installed in the inner container 30 moves upward as much as the discharged cosmetic material.

As described above, the compact container having an improved opening/closing structure for different cosmetic materials described in this disclosure is an illustrative purpose only, and the present disclosure is not limited thereto. Thus, it should be understood that numerous other modifications and embodiments can be devised by those skilled in the art within the spirit and scope of the present disclosure and they will fall within the scope of the present disclosure.

### [Description of Reference Numeral]

- 10:: Outer container
- 20:: Outer container lid
- 30:: Inner container
- 40:: Discharge unit
- 50:: Discharge plate
- 52:: Discharge outlet
- 54:: Dish part
- 56:: Joining part
- 60:: Sponge
- 70:: Shoulder ring
- 74:: Pressing protrusion
- 80:: Coupling shoulder

## Claims

1. A compact container having a discharge plate integrally injection molded by inserting a sponge thereto, the compact container comprising:
an inner container for containing a cosmetic material therein;
a discharge unit for discharging the cosmetic material contained in the inner container; and
the discharge plate formed to be adjacent to the discharge unit and having a discharge outlet,
wherein the discharge plate is molded integrally with a sponge through insert injection molding such that the sponge is attached to the discharge plate without moving,
a dish part is formed at a center the discharge plate to contain a small amount of cosmetic material, and a joining part is formed on an outer portion of the dish part to be joined to the sponge.

2. The compact container of claim 1, wherein the discharge unit includes a pump configured to pump and discharge the cosmetic material.

3. The compact container of claim 2, wherein the pump includes a piston and a piston ring which are closed in close contact with each other before the discharge plate is pressurized.

4. The compact container of claim 1, wherein the dish part is formed in a groove shape to space the sponge apart from a surface of the discharge plate.

5. The compact container of claim 1, wherein the sponge includes a compressed sponge.
